# EUROPÄISCHE PATENTSCHRIFT

(11) **EP 1 578 534 B1**
(45) Veröffentlichungstag und Bekanntmachung des Hinweises auf die Patenterteilung: **09.03.2011**
(21) Anmeldenummer: 03700288.8
(22) Anmeldetag: 27.01.2003
(51) Int. Cl.: B02B 5/02, B02B 1/04, B02B 3/00

(54) **VERFAHREN UND ANLAGE ZUR REINIGUNG VON GETREIDE**
METHOD AND INSTALLATION FOR CLEANING CEREAL
PROCEDE ET EQUIPEMENT POUR MONDER DES CEREALES

(30) Priorität: 02.01.2003 DE 10300295
(43) Veröffentlichungstag der Anmeldung: 28.09.2005
(73) Patentinhaber: Bühler AG, 9240 Uzwil (CH)
(72) Erfinder: EUGSTER, Walter, CH-9244 Niederuzwil (CH); GERSCHWILER, Othmar, CH-9243 Jonschwil (CH)
(74) Vertreter: Wilming, Martin
(86) Internationale Anmeldenummer: PCT/CH2003/000062
(87) Internationale Veröffentlichungsnummer: WO 2004/060564

(56) Entgegenhaltungen:
- CH-A- 684 576
- FR-A- 2 044 946
- US-A- 3 925 564

## Beschreibung

Die Erfindung betrifft ein Verfahren und eine Vorrichtung zur Reinigung von Getreide, insbesondere zur Schadstoffreduzierung in oberflächennahen Schalen bzw. Schichten von Getreidekörnern, wie zum Beispiel von Weizen.

Getreide, zum Beispiel Weizen oder Roggen kann nass und/oder trocken gereinigt werden, um Schmutz, lose Schalen oder Schadstoffe von der Kornoberfläche zu entfernen. In den vergangenen Jahrzehnten hat sich die weitgehend trockene Reinigung durchgesetzt. So beschreibt die CH-A-640750 ein Verfahren, bei dem Weizen einer trockenen Reinigung inklusive Scheuerung und Aspiration unterzogen wird. Anschliessend wird der Weizen genetzt und in Abstehzellen einige Stunden gelagert. Nach dem Abstehen erfolgt direkt vor der ersten Mahlpassage ein Schälen des Weizens. Der Schälung kann dabei noch eine Konditionierung vorangehen. Dies in Abhängigkeit vom Schälgrad und/oder der Mürbung der Körner nach dem.Netzen und Abstehen.

Bekannt ist es auch, Weizenkörner soweit zu polieren, dass sie von der Fruchtwand gelöst sind und der Mehlkörper frei liegt (EP-B-218012). Hierbei werden die Fruchtwände in mehreren Polierschritten schrittweise entfernt, wobei den Körnern in mindestens einem schritt Feuchtigkeit zugeführt wird. Die befeuchteten Körner können zudem erwärmt werden, zwecks Gelatinisierung der Oberfläche der Weizenkörner. Nach der Erwärmung, die auch gleichzeitig mit der Befeuchtung erfolgen kann werden die Körner getrocknet und gekühlt. Gemäss der EP-B-529843 wird genetzter und polierter Weizen erneut gereinigt. Diese Reinigung ist eine Nassreinigung, um noch anhaftende Kleieteilchen vor allem auch aus der furche zu entfernen.

Ebenso bekannt sind Getreideschleifmaschinen mit vertikal angeordnetem Rotor gemäss EP-B-742048, bei denen das zu schleifende Korngut zudem mit Luft durchströmt und mit Wasser genetzt werden kann.

Beim sogenannten PeriTec-Verfahren sollen ebenfalls die äusseren Zellschichten, eingeschlossen die Aleuronschicht, angeschliffen werden. Weizen wird analog zu konventionellen Verfahren gereinigt und genetzt, auf Scheuermaschinen kann jedoch verzichtet werden. Vor dem Schleifen wird nochmals kontrolliert genetzt. Dadurch sollen die äusseren von den inneren Schichten gelöst werden, die dann bis unter die Testa abgerieben werden. In einer ersten Stufe wird die Kleie abrasiv in einer vertikalen Schleifmaschine entfernt und in einer zweiten Stufe durch Reibpolieren. Dadurch sollen die Abstehzeiten nach einem Aufnetzen vor der Vermahlung drastisch reduziert werden können. Die Eindringzeit des Wassers zur Mürbung soll nur ca. 30 Minuten betragen. Gleichzeitig werden auch Schadstoffbelastungen reduziert.

Bei einem Verfahren zur Behandlung von trockenen und sauberen Weizenkörnern gemäss EP-B-373274 soll die freiliegende Kleiehülle entfernt werden, wobei vor der Konditionierung zur Mahlvorbereitung die Körner so befeuchtet werden, dass die äusseren Schalenschichten ohne verquellen konditioniert werden, und dass nachfolgend (innerhalb von 1 bis 5 Minuten die Körner mehreren Reibvorgängen zur Entfernung der äusseren Schalen und Schleifvorgängen zur Entfernung und Abtrennung der inneren Schalenschichten unterzogen werden.

CH684576 zeigt ein Mahlverfahren, wobei im Falle der Auszugsmehlherstellung das Getreide zunächst unter Zusatz von Wasser über eine Netzpaddelschnecke geführt wird und anschliessend in Abstehzellen abgestanden wird. Anschliessend wird das Getreide in einen Netzschäler geführt.

Der Erfindung liegt die Aufgabe zugrunde, ein Verfahren zur Reinigung von Getreide zu entwickeln, mit dem die Reinigung von Getreide, insbesondere Weizen weiter vereinfacht werden kann.

Die Lösung der Aufgabe erfolgt mit den Merkmalen des Anspruchs 1. In erfindungsgemässer Weise erfolgt dies dadurch, dass gereinigter, genetzter und abgestandener Weizen nachfolgend oberflächlich genetzt und anschliessend direkt geschält wird.

Vorteilhafte Ausgestaltungen sind in den Unteransprüchen offenbart. Insbesondere kann auf das Schälen noch ein Schleifen und ggf. ein Polieren der Kornoberflächen folgen.

Um bei der nachfolgenden Vermahlung Verunreinigungen des Mahlgutes weitgehend zu vermeiden, soll in der Mühle weitgehend auf horizontale, insbesondere mechanische Förderelemente verzichtet wird.

Das erfindungsgemässe Schälverfahren ist für Weichweizen wie für Durum anwendbar, es wird ein geringerer Schadstoffgehalt der zu vermahlenden Körner erreicht. Schadstoffbelastete Kleie kann einer gezielten Verarbeitung und Verwertung zugeführt werden. Alternativ zum Schälen ist ein intensives Schleifen oder ein Scheuern der Kornoberfläche möglich. Durch diese Vorgehensweise wird die Mehlqualität beeinflusst und die Vermahlung verändert.

Eine weitere Aufgabe besteht darin, eine Einrichtung zur Reinigung von Getreide, insbesondere Weizen zu schaffen. Diese Aufgabe ist mit den Merkmalen des Anspruchs 7 gelöst.

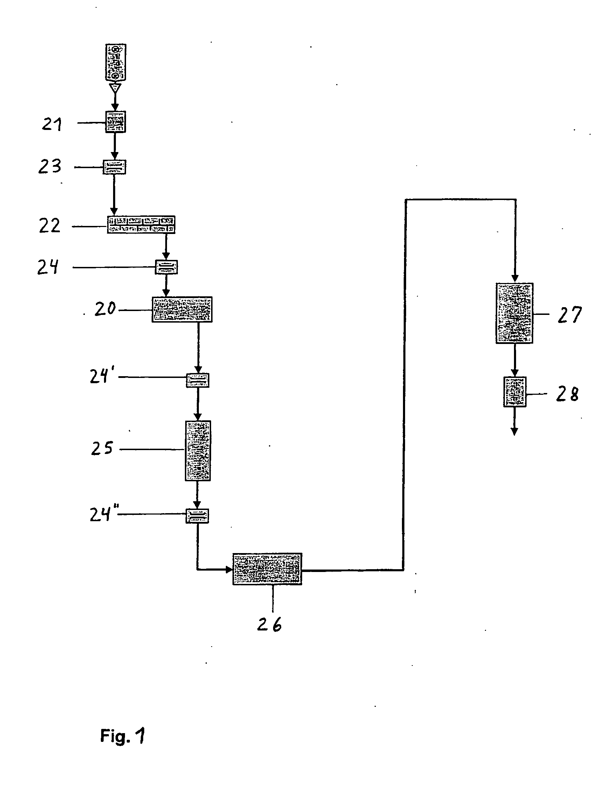

Die Erfindung wird nachfolgend in einem Ausführungsbeispiel an Hand einer Zeichnung näher beschrieben. In der Zeichnung zeigen die
- Fig. 1:: ein Verfahrensdiagramm

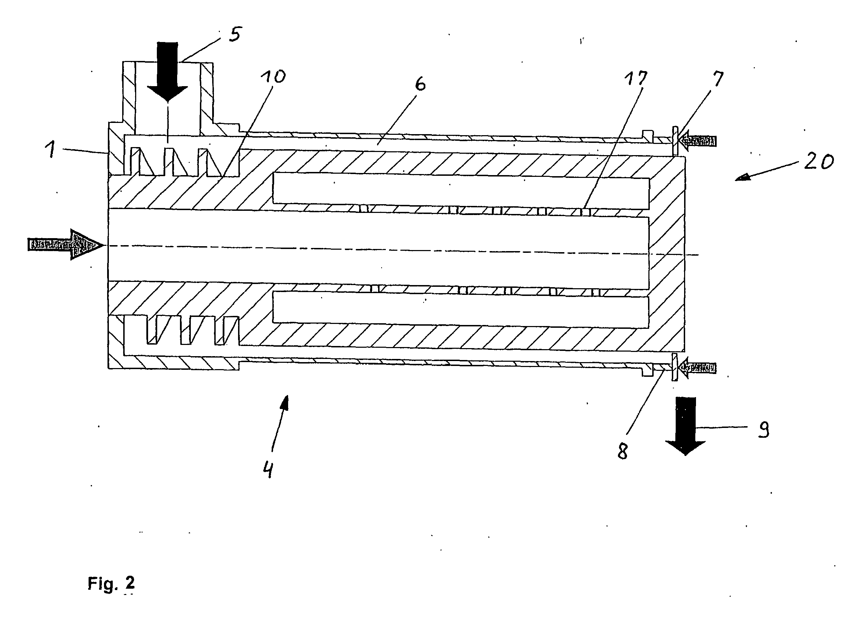

- Fig. 2:: eine Schälmaschine.

Gereinigter sowie genetzter und abgestandener Weizen gelangt aus nicht dargestellten Abstehzellzellen in einen Dosierer 21 und von da über einen Magneten 23 in ein Netz- bzw. Konditionieraggregat 22, wo die erforderliche Feuchte (Schalenkonditionierung) eingestellt wird (ca. 2%-Wasserzugabe im Beispiel). Das Netzaggregat weist eine Netzschnecke auf, alternativ sind aber auch zwei Schnecken möglich. Der genetzte Weizen wird über einen Magneten 23 geführt und gelangt in die Schälmaschine 20, wo der Weizen mit einem Schälgrad von ca. 4% geschält wird. Während des Schälens wird der Weizen von einem Luftstrom durchströmt.

Der geschälte Weizen gelangt über einen weiteren Magneten 24' in eine vertikale Schleifmaschine 25, zum Beispiel eine Steinschleifmaschine und von da über einen Magneten 24" in eine Poliermaschine 26.

Der so gereinigte und vorbereitete Weizen wird in einem Depot 27 zwischengelagert und über einen Dosierer 28 der Vermahlung, beginnend mit dem ersten Schrot zugeführt.

Der Durchfall der Schälmaschine 20 und das in der Aspiration anfallende Leichtprodukt wird abgetrennt, separat vermahlen, zu Pellets verpresst und zum Beispiel einer Verwendung als Brennstoff zugeführt. Auch der beim schleifen und polieren anfallende Durchfall wird in dieser Weise verarbeitet.

Der Stator 1 der Schälmaschine 20 weist ein Gehäuse 2 auf, das einen darin gelagerten Rotor 3 umgibt und auf einem Rahmengestell montiert und nach unten durch eine anschliessende Auslauftrimelle 4 offen ist. Durch diese Auslauftrimellen wird der Durchfall aus Schälmehl und Schalenteilen abgeführt.

Von einem Produkteinlauf 5 gelangen die Weizenkörner über eine Speiseschnecke 10 in die Bearbeitungszone 6. Während des Schälens werden die Weizenkörner gegen eine einstellbare Staueinrichtung 7 geführt, um einen spezifischen Bearbeitungsdruck in der Bearbeitungszone 6 zu bilden. Die geschälten Weizenkörner verlassen die Bearbeitungszone 6 durch eine einstellbare Auslauföffnung 8 und über einen Auslauf 9 die Schälmaschine 20.

Die Bearbeitungszone 6 wird statorseitig von zwei Siebkörben gebildet, so dass sie den Rotor 3 in axialer Richtung vollständig umhüllen. Der Rotor 3 ist aus einer Hartgusswalze mit einer Hohlwelle gebildet. Die Walze beinhaltet Schlitze, die auf dem Umfang der Walze gleichmässig voneinander beabstandet angeordnet sind und die sich über die ganze Länge der Bearbeitungszone 6 erstrecken.

Die Siebkörbe bestehen aus einzelnen Siebblechen.

Die Hohlwelle weist eine Vielzahl von Öffnungen für den Austritt von Luft auf. Die Luft gelangt weiter durch die Schlitze in der Walze in die Bearbeitungszone 6 und hilft, Schalenteile etc. von den Weizenkörnern zu separieren. Die Luft wird mittels eines Ventilators in die Hohlwelle gepresst.

### Bezugszeichen

- 1: Stator
- 2: Gehäuse
- 3: Rotor
- 4: Auslauftrimelle
- 5: Produkteinlauf
- 6: Bearbeitungszone
- 7: Staueinrichtung
- 8: Auslauföffnung
- 9: Auslauf
- 10: Speiseschnecke
- 20: Schälmaschine
- 21: Dosierer
- 22: Netzaggregat
- 23: Magnet
- 24: Magnet
- 25: Schleifmaschine
- 26: Poliermaschine
- 27: Depot
- 28: Dosierer

## Patentansprüche

1. Verfahren zur Reinigung von Getreide, insbesondere von Weizen, wobei der Weizen zunächst gereinigt und genetzt wird und absteht, **dadurch gekennzeichnet, dass** des getreide anschliessend in einem Netzaggregat (22) oberflächlich genetzt und nachfolgend in einer Schälmaschine (20) oberflächlich bearbeitet wird, wobei die Oberflächenbearbeitung ein Schälen ist

2. Verfahren nach Anspruch 1, **dadurch gekennzeichnet, dass** die Oberfläche der Getreidekörner nach dem Schälen geschliffen wird.

3. Verfahren nach Anspruch 2, **dadurch gekennzeichnet, dass** die Oberfläche der Getreidekörner nach dem Schleifen noch poliert wird.

4. Verfahren nach einem der Ansprüche 1 bis 3, **dadurch gekennzeichnet, dass** die beim Schälen anfallende Kleie und/oder die beim Sichten anfallende Leichtfraktion vermahlen und zu Pellets verpresst wird.

5. Verfahren nach Anspruch 4, **dadurch gekennzeichnet, dass** die Pellets als Brennstoff verwendet werden.

6. Verfahren nach mindestens einem der Ansprüche 1 bis 3, **dadurch gekennzeichnet, dass** die geschälten Getreidekörner anschliessend vermahlen werden, wobei horizontale Förderelemente in der Mühle vermieden werden.

7. Einrichtung zur Reinigung von Getreide, enthaltend Wäge- und Dosierelemente, **dadurch gekennzeichnet, dass** dem Wägeelement und dem Dosierelement in Produktflussrichtung ein Netzaggregat (22) gefolgt von einer Schälmaschine (20) nachgeordnet ist

8. Einrichtung nach Anspruch 7, **dadurch gekennzeichnet, dass** die Schälmaschine (20) einen drehbar gelagerten Rotor, der mit Bearbeitungswerkzeugen versehen ist und einen Stator, der Bearbeitungswerkzeuge und Siebkörbe beinhaltet, enthält, die den Rotor unter Bildung einer Bearbeitungszone (6) umgeben, wobei der Rotor (3) aus einer Hohlwelle besteht, die im Bereich der Bearbeitungszone (6) von einer äusseren Walze umgeben ist.

## Claims

1. Method for cleaning cereal, in particular wheat, wherein the wheat is initially cleaned and wetted and conditioned, **characterized in that** the cereal is subsequently superficially wetted in a wetting aggregate (22) and consecutively superficially processed in a shelling machine (20), wherein the superficially processing is a shelling.

2. Method according to Claim 1, **characterized in that** the surface of the cereal grains is ground after shelling.

3. Method according to Claim 2, **characterized in that** the surface of the cereal grains is also polished after grinding.

4. Method according to one of Claims 1 to 3, **characterized in that** the bran produced during shelling and/or the light fraction obtained while sifting is ground and pressed into pellets.

5. Method according to Claim 4, **characterized in that** the pellets are used as fuel.

6. Method according to at least one of Claims 1 to 3, **characterized in that** the shelled cereal grains are subsequently ground, wherein horizontal conveying elements in the mill are avoided.

7. Device for cleaning cereal, containing weighing and metering elements, **characterized in that** a wetting aggregate (22) followed by a shelling machine (20) are arranged downstream of the weighing element and the metering element in the direction of product flow.

8. Device according to Claim 7, **characterized in that** the shelling machine (20) incorporates a rotatably mounted rotor, which is provided with processing tools, and a stator, which includes processing tools and sifting baskets which surround the rotor, forming a processing zone (6), wherein the rotor (3) consists of a hollow shaft enveloped in the region of the processing zone (6) by an outer roller.

## Revendications

1. Procédé pour nettoyer des céréales, notamment du blé, dans lequel le blé est d'abord nettoyé et mouillé et conditioné, **caractérisé en ce que** les céréales sont ensuite mouillées en surface dans une unité de mouillage (22), puis sont traitées en surface dans une machine à décortiquer (20), le traitement de surface étant un décorticage.

2. Procédé selon la revendication 1, **caractérisé en ce que** la surface des grains de céréales est moulue après le décorticage.

3. Procédé selon la revendication 2, **caractérisé en ce que** la surface des grains de céréales est encore polie après la mouture.

4. Procédé selon l'une quelconque des revendications 1 à 3, **caractérisé en ce que** le son produit lors du décorticage et/ou la fraction légère produite lors du criblage sont broyés et comprimés pour former des granules.

5. Procédé selon la revendication 4, **caractérisé en ce que** les granules sont utilisés comme combustible.

6. Procédé selon au moins l'une quelconque des revendications 1 à 3, **caractérisé en ce que** les grains de céréales décortiqués sont ensuite broyés, des éléments de transport horizontaux étant évités dans le broyeur.

7. Dispositif pour nettoyer des céréales, contenant des éléments de pesée et de dosage, **caractérisé en ce qu'**une unité de mouillage (22) est montée après l'élément de pesée et l'élément de dosage dans la direction du flux de produit, suivie par une machine à décortiquer (20).

8. Dispositif selon la revendication 7, **caractérisé en ce que** la machine à décortiquer (20) comprend un rotor monté à rotation, qui est pourvu d'outils de traitement, et un stator qui comprend des outils de traitement et des paniers de cribles, qui entourent le rotor en formant une zone de traitement (6), le rotor (3) se composant d'un arbre creux qui est entouré, dans la région de la zone de traitement (6), par un cylindre extérieur.
